# NEUE EUROPÄISCHE PATENTSCHRIFT

(11) **EP 0 673 328 B2**
(45) Veröffentlichungstag und Bekanntmachung des Hinweises auf die Entscheidung über den Einspruch: **14.03.2001**
(45) Hinweis auf die Patenterteilung: 09.07.1997
(21) Anmeldenummer: 94930178.2
(22) Anmeldetag: 16.10.1994
(51) Int. Cl.: B62D 5/06, B62D 6/00, F04B 49/06

(54) **SERVOLENKVORRICHTUNG**
POWER-ASSISTED STEERING SYSTEM
SYSTEME DE DIRECTION ASSISTEE

(30) Priorität: 16.10.1993 DE 4335390
(43) Veröffentlichungstag der Anmeldung: 27.09.1995
(73) Patentinhaber: TRW Fahrwerksysteme GmbH & Co. KG, 40547 Düsseldorf (DE)
(72) Erfinder: SEIDEL, Mathias, D-40667 Meerbusch (DE); VILE, David, D-41366 Schwalmtal-Amern (DE)
(74) Vertreter: Christophersen, Ulrich Rudolf
(86) Internationale Anmeldenummer: EP9403407
(87) Internationale Veröffentlichungsnummer: WO9511152

(56) Entgegenhaltungen:
- EP-A- 0 091 590
- EP-A1- 0 395 310
- EP-A1- 0 515 052
- EP-A1- 0 580 997
- EP-B1- 0 350 809
- WO-A-93/22180
- DE-A- 3 920 862
- DE-A- 4 201 577
- DE-A1- 3 045 428
- DE-A1- 3 100 067
- DE-A1- 3 303 857
- DE-A1- 4 040 003
- DE-A1- 4 207 719
- DE-A1- 4 332 233
- DE-C2- 3 424 826
- JP-A- 4 163 279
- JP-A- 58 156 457
- JP-A- 59 048 267
- JP-A- 60 018 453
- US-A- 4 392 540
- US-A- 5 082 076
- US-A- 5 307 892
- PATENT ABSTRACTS OF JAPAN vol. 15, no. 339 (M-1152) 28. August 1991 & JP,A,03 132 471 (TOYODA MACH WORKS LTD; OTHERS: 01) 5. Juni 1991

## Beschreibung

Die Erfindung betrifft eine Servolenkvorrichtung gemäß dem Oberbegriff von Anspruch 1 sowie ein Verfahren gemäß Anspruch 10.

Ein bekannter, in der Praxis in Servolenkvorrichtungen eingesetzter Typ von Servoventilen ist das Servoventil mit sogenannter offener Mitte. In der Neutralstellung des Servoventils mit offener Mitte wird von der Pumpe Hydraulikflüssigkeit mit einem niedrigen Druck durch das offene Ventil in ein Reservoir gepumpt. Bei einer relativen Verdrehung der Eingangswelle des Servoventils zur Ventilhülse wird Hydraulikdruck einem Hydraulikmotor zugeführt, wodurch die Bewegung einer Zahnstange der Lenkung in eine der beiden möglichen Richtungen unterstützt wird. Bei diesen bekannten Servoventilen mit offener Mitte wird die Pumpe zur Förderung der Hydraulikflüssigkeit zum Servoventil über einen Keilriemen vom Antriebsmotor des Fahrzeuges angetrieben. Bei diesen bekannten Servoventilen mit offener Mitte wird, auch in Neutralstellung des Servoventils ein ständiger, hoher Hydraulikmittelfluß aufrechterhalten, da die Pumpe direkt mit dem Antriebsmotor verbunden ist. Es ist somit eine Verlustleistung vom Antriebsmotor zu erbringen, die sich aus dem Staudruck und dem Volumenstrom herleitet. Darüber hinaus unterbleibt bei den bekannten Servolenkvorrichtungen die Servounterstützung der Lenkung, sobald der Antriebsmotor des Fahrzeuges abgeschaltet ist, beispielsweise beim Abschleppen eines liegengebliebenen Fahrzeuges.

Aus der DE-OS 36 22 217 ist eine Servolenkvorrichtung bekannt, bei welcher zum Antrieb der Pumpe ein Elektromotor eingesetzt wird. Bei dieser vorbekannten gattungsgemäßen Servolenkvorrichtung wird mittels eines Drucksensors der Hydraulikdruck überwacht und in Abhängigkeit vom Hydraulikdruck der Pumpenantriebsmotor in mindestens drei Schaltzuständen nämlich ein, Minimum und Maximum geschaltet.

Eine gattungsgemäße Servolenkvorrichtung ist aus der DE-OS 39 20 862 bekannt, bei welcher ebenfalls ein Elektromotor zum Antrieb der Pumpe verwendet wird, der zusätzlich von einem fahrzeuggeschwindigkeitsabhängigen Signal gesteuert wird.

Die vorbekannten gattungsgemäßen Servolenkvorrichtungen gehen davon aus, daß der Elektromotor nur mit einem Minimum an Energie versorgt werden muß, solange das Servoventil in einer Neutralposition steht. In diesem Zustand muß der Elektromotor die Pumpe nur so weit antreiben, daß ein minimaler Hydraulikdruck aufrechterhalten wird. Bei einer Lenkeingabe wird ein höherer Hydraulikdruck erforderlich, so daß der Elektromotor in einen Betriebszustand höherer Leistungsaufnahme umgeschaltet wird. Dabei wird grundsätzlich gewünscht, daß diese Umschaltung in Abhängigkeit von einem Eingangsdrehmoment auf die Eingangswelle des Servoventils erfolgt. Um dies schaltungstechnisch zu realisieren, wird beispielsweise die Stromaufnahme des Elektromotors gemessen, welche ein Maß für den erforderlichen Hydraulikdruck darstellt. Unterhalb eines Hydraulikdrucksoltwertes wird der Elektromotor dann im unteren Leistungsaufnahmebereich betrieben, während ab Erreichen des Drucksoliwertes die Umschaltung auf den oberen Leistungsaufnahmebereich erfolgt.

Bei den vorbekannten Servolenkvorrichtungen kann ein momentabhängiger Schaltpunkt nicht gewährleistet werden. Der Verlauf des erforderlichen Druckes als Funktion des Eingangsdrehmomentes ist parabelförmig. Diese im Normalfall die Druckachse schneidende Parabel ist bekanntermaßen zunächst unterhalb eines Grenzdrukkes nur flach steigend. Bereits geringe Unterschiede der Systeme untereinander, beispielsweise bedingt durch Fertigungstoleranzen oder Verschleiß, können die Lage der Parabel auf der Druckachse beeinflussen. Insbesondere wirkt sich auch die Temperatur des Systemöls erheblich auf die Lage der Druckkurve als Funktion des Drehmomentes aus. Bei sehr kaltem Öl, welches eine sehr hohe Viskosität aufweist, ist der Druck in der Neutralstellung des Servolenkventiles bereits sehr hoch. Wird nun der Umschaltpunkt für die Leistungsaufnahmebereiche des Elektromotors in Abhängigkeit von diesem Druckminimum als absoluter Druckwert festgelegt, so wandert dieser bei sich erwärmenden Hydrauliköl zwangsläufig auf der Druckkurve, da der erforderliche Druck in Neutralstellung sinkt. Dies führt dazu, daß nach einer gewissen Betriebszeit die Umschaltung des Elektromotors von dem einen in den anderen Leistungsaufnahmebereich erst zu einem späteren Zeitpunkt, das heißt erst ab einem größeren Drehmoment erfolgt. Damit ist aber kein momentabhängiger Schaltpunkt mehr gewährleistet.

Weiterhin erfolgt bei den vorbekannten Servolenkvorrichtungen nur aufgrund der Hydraulikdruckerfordernisse eine Umschaltung des Elektromotors zwischen verschiedenen Leistungsaufnahmebereichen. Dies führt dazu, daß der Motor ab einem bestimmten aufgebrachten Lenkmoment in den höheren Leistungsaufnahmebereich geschaltet wird und in diesem verbleibt, bis das Lenkmoment wieder reduziert wird. Beispielsweise kann ein Lenkeinschlag in einem Fahrzeug in der Nähe einer Bordsteinkante dazu führen, daß die Reifen gegen die Bordsteinkante anschlagen oder ein Lenkungsanschlag erreicht wird, trotzdem ein maximales Drehmoment aufgebracht wird und der Motor somit im höchsten Leistungsaufnahmebereich betrieben wird. Dieser Zustand, über eine ausreichende Zeitspanne aufrechterhalten, führt zu einer außergewöhnlichen Temperaturerhöhung des Motors und kann bis hin zu einer Zerstörung der Steuerelektronik oder des Motor führen.

Schließlich sind vorbekannte Servolenkvorrichtungen der gattungsgemäßen Art nur sehr schwer überprüfbar sind. Fehlfunktionen können in der Regel erst dann erkannt werden, wenn eines der Bauelemente der Servolenkvorrichtung ausfällt. Dies führt in der Regel zu einem vollständigen Druckverlust und damit zu einem Verlust der Servounterstützung im Lenkungsbereich.

Das Beschriebene führt zu hohen Belastungen des Pumpenantriebsmotors und der dazugehörigen Sensoren und der Elektronik einer Servolenkvorrichtung, woraus ein großer Verschleiß und geringe Standzeiten folgen. Weiterhin wirkt sich die Wanderung des momentabhängigen Schaltpunktes auch auf den Bedienkomfort aus.

Davon ausgehend liegt der Erfindung die **Aufgabe** zugrunde, eine gattungsgemäße Servolenkvorrichtung dahingehend zu verbessern, daß bei verbessertem Bedienungskomfort durch geringere Belastungen der Elemente ein geringerer Verschleiß und damit erhöhte Standzeiten erzielbar sind. Weiterhin soll ein Verfahren zur Steuerung des elektrischen Pumpenantriebsmotors angegeben werden.

Zur technischen **Lösung** der Aufgabe werden die Merkmale des Anspruchs 1 und die Maßnahmen nach Anspruch 10 vorgeschlagen.

Durch diese erfindungsgemäße Lösung wird ermöglicht, beispielsweise Schaltgrenzen darstellende Sollwerte in Abhängigkeit von Betriebszuständen, das heißt aufgrund der Überwachung von Betriebsparametern festzulegen. So kann beispielsweise eine Temperaturkompensation des Umschaltpunktes zwischen einem minimalen und einem maximalen Leistungsaufnahmebereich erfolgen. Auch Fertigungstoleranzen, Verschleiß und dergleichen können entsprechend ausgeglichen werden, da gewährleistet werden kann, daß der Schaltpunkt tatsächlich in gewünschter Weise momentabhängig ist.

Gemäß der Erfindung wird vorgeschlagen, daß die Elektronik einen Stromsensor umfaßt, der die Leistungsanforderung der Pumpe erfaßt. Die Stromaufnahme des Elektromotors stellt ein Maß für die Leistungsanforderung der Pumpe dar. Beim Auslenken des Servoventils wird von der Pumpe ein höherer Hydraulikdruck gefordert, was wiederum einen höheren Leistungsbedarf der Pumpe zur Folge hat. Der Sensor erfaßt diese Leistungsanforderung der Pumpe und die elektronische Steuereinheit läßt, sobald die angeforderte Leistung einen Grenzwert überschreitet, einen Schalttransistor die volle Betriebsspannung auf den Motor durchschalten. Im umgekehrten Fall schaltet die Elektronik die Versorgungsspannung des Elektromotors wieder auf stand by-Betrieb, wenn die Leistungsanforderung der Pumpe wieder unter einen Grenzwert absinkt. Die Steuerung zur Abschaltung der Versorgungsspannung ist dabei so ausgelegt, daß der Grenzwert für eine bestimmte Zeit unterschritten werden muß, um die entsprechend Abschaltung der Versorgungsspannung auszulösen. Diese Mindestzeit ist vorgesehen, um den Lenkkomfort nicht dadurch zu beeinträchtigen, daß die Pumpe in kurzen Abständen angefahren und wieder herabgefahren und somit der Hydraulikdruck im Servoventil stark variiert wird. Durch einen Stromsensor kann eine erfindungsgemäße Servolenkvorrichtung sehr sensibel auf die Leistungsanforderungen der Pumpe reagieren. Gemäß einem Vorteil der Erfindung ermittelt die Steuereinheit mittels des Stromsensors ein Stromaufnahmeminimum des Elektromotors, um damit einen Sollwert zum Schalten zwischen Leistungsaufnahmebereichen festzulegen. Durch diese Maßnahme wird gewährleistet, daß als Basis für die Schaltwertberechnung die Leistungsanforderung in der Neutralstellung in dem jeweiligen Betriebszustand dient. Damit können sich Temperaturveränderungen und dergleichen nicht nachteilig auf die Umschaltwerte auswirken, so daß die Umschaltung in jedem Betriebszustand aufgrund des gleichen auftretenden Momentes erfolgen kann.

Gemäß weiteren Vorschlägen der Erfindung kann die Elektronik einen Drucksensor, der die Druckänderungen am Servoventil erfaßt, sobald eine Auslenkung des Servoventils aus der Neutralstellung erfolgt, oder einen Näherungssensor umfassen, der die Stellung eines Bauteiles im Lenkgetriebe abtastet und über die Stellung dieses Bauteiles den Betriebszustand des Servoventils erfaßt. Mit dem Drucksensor können direkt Hydraulikdruckparameter ermittelt werden. Über den Näherungssensor kann beispielsweise die Auslenkung eines Reaktionskolbens im Servolenkventil und damit ein drehmomentabhängiger Ausgangswert ermittelt werden. Bei allen Sensortypen wird das Sensorsignal in einer elektronischen Steuereinheit ausgewertet, die daraus die Versorgungsspannung des Elektromotors bestimmt. In dieser Steuereinheit erfolgt der Vergleich zwischen dem aktuellen Sensorsignal und den entsprechenden, vorgegebenen Grenzwerten. Sobald das Sensorsignal einen Grenzwert überschreitet bzw. unterschreitet, wird der Betriebsmodus des Elektromotors auf volle Leistung bzw. Stand by gestellt.

Gemäß einem Vorschlag der Erfindung läuft der Elektromotor in der Neutralstellung des Hydraulikzylinders im stand by-Betrieb. Durch diese Mindestspannung bzw. den stand by-Betrieb der Pumpe weist die erfindungsgemäße Servolenkvorrichtung eine sehr kurze Reaktionszeit auf; bei der Auslenkung und der Neutralstellung ist somit die Servounterstützung nahezu totzeitfrei verfügbar. Würden der Elektromotor und somit auch die Pumpe in Neutralstellung des Servoventils ausgeschaltet, müßte bei einer Auslenkung des Servoventils die Motordrehzahl von Null auf volle Drehzahl beschleunigt werden, wodurch zu Beginn der Lenkbewegung keine Servounterstützung verfügbar wäre. Gemäß einem weiteren vorteilhaften Vorschlag der Erfindung aktiviert die Steuereinheit eine Strombegrenzung für den Elektromotor, wenn ein ausgewählter Betriebsparameter für eine vorgegebene Zeit einen vorgegebenden Grenzwert überschreitet. Der Stromwert, auf den begrenzt wird, kann erheblich unter dem Grenzwert liegen. Durch diese Maßnahme können die beschriebenen Bauteilbelastungen und gegebenenfalls Zerstörungen während eines Lenkanschlagbetriebes vermieden werden. Gemäß einem Vorschlag der Erfindung weist die Elektronik einen Hallsensor auf. Dieser Hallsensor kann dazu eingesetzt werden, die Umdrehungsgeschwindigkeit der Welle des Elektromotors oder überhaupt Drehbewegungen der Welle zu ermitteln. So kann beispielsweise festgestellt werden, ob nach der Aktivierung einer Strombegrenzung eine Änderung der momentabhängigen Druckanforderungen eingestellt wird, so daß das System wieder in den Normalbetriebszustand umgeschaltet werden kann.

Gemäß einem weiteren Vorteil der Erfindung überprüft die Steuereinheit wenigstens zwei Betriebsparameter im Rahmen einer Plausibilitätsüberwachung. Die Steuereinheit ermittelt über die Sensoren wenigstens zwei Betriebsparameter die üblicherweise in einer funktionalen Beziehung zueinander stehen, beispielsweise die Umdrehungsgeschwindigkeit der Elektromotorwelle und den Hydraulikdruck Beide müssen in einer Beziehung zueinander stehen, was die Steuereinheit beispielsweise über den Vergleich mit Wertetabellen überprüfen kann. Ist diese Beziehung gestört, ist auf Funktionsstörungen zu schließen. Durch diese Maßnahme können Funktionsstörungen früh erfaßt werden. Für das Ablegen von Wertetabellen, Zwischenwerten, Ablaufroutinen und dergleichen weist die Steuereinheit in vorteilhafter Weise einen Speicher auf.

Verfahrensseitig schlägt die Erfindung ein Verfahren zur Steuerung des elektrischen Pumpenantriebsmotors einer Servolenkvorrichtung nach Anspruch 10 vor.

Durch das erfindungsgemäße Verfahren wird sichergestellt, daß Sollwerte, beispielsweise Schaltwerte, den jeweiligen Betriebszuständen angepaßt werden können.

Wie bereits ausgeführt wurde, haben Servolenkventile der gattungsgemäßen Art bei der Produktion eine gewisse Streuung in der Differenzdruck/Drehmoment - Kennlinie. Die Leistungsaufnahme des Elektromotors wird, um den Energieverbrauch zu senken, hauptsächlich im Bereich um den Nullpunkt (Mittelposition des Lenkrades) geregelt. In diesem Bereich machen sich Änderungen z.B. des Druckanstieges besonders stark bemerkbar. Dadurch wird das Steuerverhalten stark von einer Lenkung zur anderen variieren. Desweiteren beeinflussen Temperaturänderungen die Viskosität des Öls in der Lenkung. So hat Öl bei niedrigen Temperaturen eine hohe Viskosität. Dadurch entsteht ein höherer Umlaufdruck in der Lenkung, was wiederum Drehzahl und Strom des Motors beeinflußt. Wird nun einer dieser Werte abgefragt interpretiert die Steuerelektronik dieses als Lenkvorgang. Das wiederum veranlaßt die Elektronik den Motor in einen falschen Betriebszustand zu schalten. Daraus resultiert ein größerer Energieverbrauch und ein höheres Geräuschniveau als notwendig.

Gemäß der Erfindung wird als Betriebsparameter die Stromaufnahme des Elektromotors überwacht. Gemäß weiteren Vorschlägen der Erfindung können der Hydraulikdruck und die Umdrehung der Elektromotorwelle überwacht werden.

Mit besonderem Vorteil wird vorgeschlagen, daß in regelmäßigen Zeitabständen die minimale Stromaufnahme ermittelt und dieser Wert als Basis zur Berechnung eines Umschaltwertes zwischen Leistungsaufnahmebereichen des Elektromotors verwendet wird.

Durch Auswertung des Stromsignals werden Mindestwerte ermittelt, auf den der Strom bisher abgesunken ist. Nun wird der Vergleichswert beispielsweise kurz über den Mindestwert gesetzt. Wird dieser Vergleichswert überschritten so wird ein Lenkausschlag erkannt und dem Motor entsprechend Leistung zugeführt. Erwärmt sich die Lenkung so sinkt die Viskosität des Öls und somit fällt der Umlaufdruck und der Strom ab bzw. die Drehzahl steigt an. Dieses wird über den Mindestwert erkannt und der Vergleichswert wird neu gesetzt.

Dadurch wird immer eine konstante Empfindlichkeit, unabhängig von Lenkungsstreuung oder Temperatur, der Regelung erreicht.

Gemäß einem weiteren vorteilhaften Vorschlag der Erfindung wird die Stromzufuhr zum Elektromotor begrenzt, wenn wenigstens ein ausgewählter Betriebsparameter für eine vorgegebene Zeitspanne einen festgelegten oberen Sollwert überschreitet. Wie bereits ausgeführt wurde, verbrauchen vorbekannt Servolenksysteme im Endanschlag der Lenkung eine sehr hohe Leistung, um einen hohen Druck zu erzeugen, da das Lenkventil geschlossen ist, dieses aber keinen Nutzen erbringt. Das führt zu einer starken Erhitzung des Motors und der Elektronik und wird diese, wenn keine Temperaturabschaltung vorhanden ist, in kürzester Zeit zerstören.

In vorteilhafter Weise wird beispielsweise der Strom ständig überwacht. Wird ein Grenzwert für länger als z.B. drei Sekunden überschritten, so wird eine Stromgrenze aktiviert, die den Strom auf begrenzt. Dadurch wird die Verlustleistung um entscheidend verringert. Gleichzeitig bewirkt dieses aber nahezu ein Blockieren des Motors, welches unkritisch ist, da sich die Lenkung schon im Anschlag befindet. Nun wird die Bewegung des Motorrotors z.B. über Hallsensoren beobachtet. Wenn der Motor sich wieder schneller dreht, bedeutet dieses, daß sich die Lenkung nicht mehr am Anschlag befindet und die Stromgrenze wieder abgeschaltet werden kann, so daß die Lenkung wieder in einen normalen Betriebszustand kommt.

In vorteilhafter Weise erfolgt die Sollwertberechnung zeitgetaktet. Mit besonderem Vorteil wird vorgeschlagen, daß in funktionaler Beziehung zueinanderstehende, überwachte Betriebsparameter auf Plausibilität überprüft werden. Dies kann beispielsweise anhand von gespeicherten Wertetabellen erfolgen.

Zueinander in Beziehung stehende Betriebsparameter sind beispielsweise der Hydraulikdruck und die Umdrehungsgeschwindigkeit der Elektromotorwelle, ebenso wie die Umdrehungsgeschwindigkeit der Pumpenwelle, die Temperatur und dergleichen. Derartige Betriebsparameter werden erfaßt und beispielsweise anhand von Wertetabellen überprüft, ob die erfaßte Wertekombination plausibel ist. Anderenfalls kann auf eine Funktionsstörung geschlossen und dies beispielsweise zur Anzeige gebracht werden.

Mit der Erfindung werden eine Servolenkvorrichtung und ein Verfahren angegeben, welche die Verwendung von Servolenkvorrichtungen komfortabler machen und längere Standzeiten ermöglichen.

Weitere Einzelheiten und Vorteile ergeben sich aus der nachfolgenden Beschreibung der zugehörigen Zeichnungen, in denen zwei Ausführungsbeispiele einer erfindungsgemäß ausgebildeten Servolenkvorrichtung schematisch dargestellt sind. In den Zeichnungen zeigen:
- Fig. 1: einen Hydraulik- und Stromschaltplan einer Servolenkvorrichtung mit Stromsensor;
- Fig. 2: eine Detaildarstellung der in Fig. 1 nur als Blockschaltbild dargestellten Elektronik mit einem Stromsensor;
- Fig. 3: einen Stromlaufplan einer Servolenkvorrichtung mit im Längsschnitt dargestelltem Lenkgetriebe mit einem Näherungssensor:
- Fig. 4: ein Fließbild, das die Verarbeitung des Sensorsignals in der elektronischen Regeleinheit darstellt:
- Fig. 5: ein Diagramm, das den zeitlichen Verlauf der Motorspannung in Abhängigkeit vom Stromfluß durch den Schalttransistor und der Belastung der Pumpe darstellt:
- Fig. 6: ein Fließbild, das die Verarbeitung und Ermittlung der Sollwerte für die Umschaltung in einen höheren Leistungsaufnahmebereich darstellt:
- Fig. 7: ein Fließbild, das die Verarbeitung der Sollwerte für die Umschaltung in einen niedrigeren Leistungsaufnahmebereich darstellt, und
- Fig. 8: ein Fließbild, daß die Aktivierung einer Strombegrenzung darstellt.

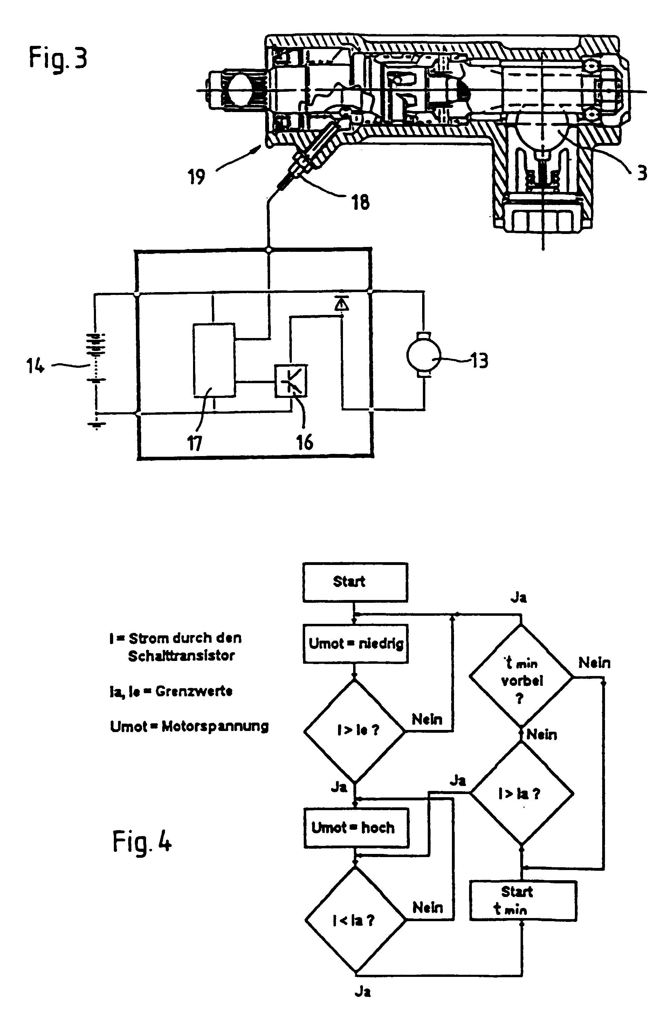

Eine Servolenkvorrichtung wird in Verbindung mit einer nicht dargestellten mechanischen Lenkung benutzt, um das über ein Lenkrad aufzubringende Lenkmoment zu reduzieren. Dies geschieht mittels eines Hydraulikzylinders 1, dessen Kolbenstange 2 mit einer Spurstange 3 (dargestellt in Fig. 3) verbunden ist. Kammern 4 und 5 des Hydraulikzylinders 1 werden in Abhängigkeit vom Lenkeinschlag über ein Servoventil 6 mittels einer Pumpe 7 durch Leitungen 8 und 9 mit Hydraulikflüssigkeit beaufschlagt.

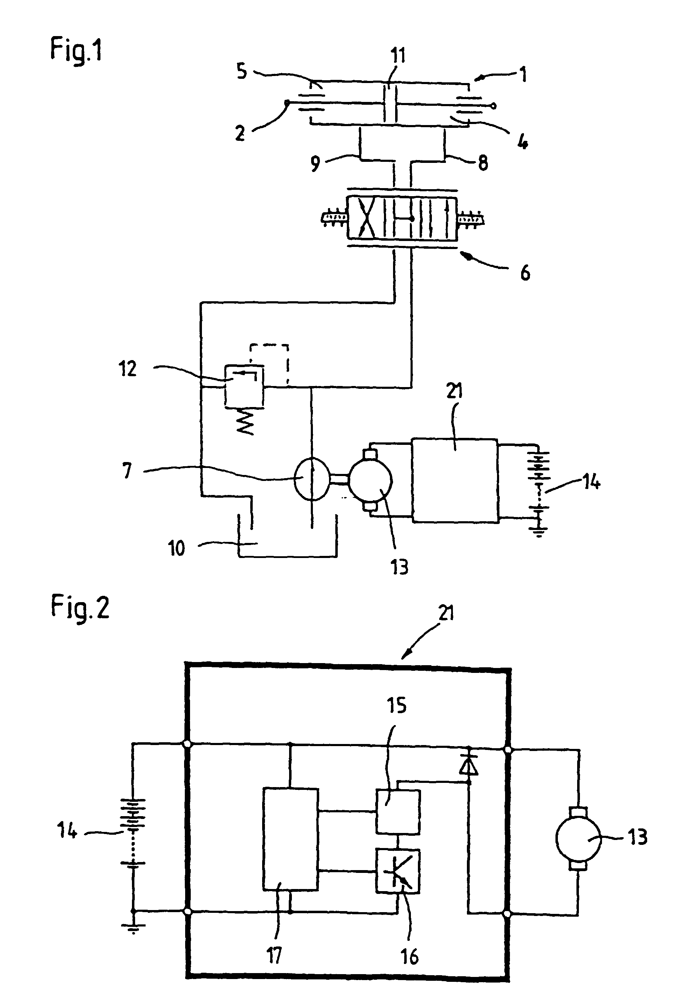

Wie aus dem Hydraulikschaltplan in Fig. 1 ersichtlich, wird die Hydraulikflüssigkeit mittels der Pumpe 7 ausgehend von einem Reservoir 10 über das Servoventil 6 zum Hydraulikzylinder 1 gepumpt. Wird beispielsweise Hydraulikflüssigkeit über die Leitung 8 in die Kammer 4 gepumpt, so verschiebt sich ein an der Kolbenstange 2 angeordneter Kolben 11 nach links, wodurch Hydraulikflüssigkeit aus der Kammer 5 über die Leitung 9 zurück zum Servoventil 6 gedrückt wird. Diese Hydraulikflüssigkeit fließt dann zurück in das Reservoir 10. In der in Fig. 1 dargestellten Neutralstellung von Hydraulikzylinder 1 und Servoventil 6 gelangt keine Hydraulikflüssigkeit zum Hydraulikzylinder 1. Die Hydraulikflüssigkeit wird lediglich mittels der Pumpe 7 vom Reservoir 10 durch das Servoventil 6 zurück in das Reservoir 10 gepumpt. Aus Sicherheitsgründen ist im Hydraulikschaltplan zusätzlich ein Überdruckventil 12 angeordnet, welches einen Kurzschluß zwischen der Pumpe 7 und dem Reservoir 10 für den Fall herstellt. daß ein Abfluß der Hydraulikflüssigkeit über das Servoventil 6 bzw. das Servoventil 6 und den Hydraulikzylinder 1 nicht möglich ist.

Die Pumpe 7 zur Förderung der Hydraulikflüssigkeit wird von einem Elektromotor 13 angetrieben, der von der Batterie 14 des Fahrzeuges über eine Elektronik 21 mit Spannung versorgt wird. Eine detaillierte Darstellung der Elektronik 21 ist Fig. 2 zu entnehmen. Um eine bedarfsabhängige Spannungsversorgung des Elektromotors 13 zu ermöglichen, ist ein Stromsensor 15 vorgesehen, der die Leistungsanforderung der Pumpe 7 erfaßt und über eine elektronische Steuereinheit 17 an einen Schalttransistor 16 weiterleitet. Die prinzipielle Arbeitsweise dieser elektronischen Steuereinheit 17 ist dem in Fig. 4 dargestellten Fließbild zu entnehmen.

Die Servolenkvorrichtung gemäß Fig. 3 kann auch mit einem Näherungssensor 18 ausgestattet sein, der die Stellung eines geeigneten Bauteils im Lenkgetriebe 19 abtastet. Diese Information des Näherungssensors 18 wird wiederum der elektronischen Steuereinheit 17 zugeleitet, welche dieses Signal in einer dem Fließbild in Fig. 4 entsprechenden Weise auswertet und daraus die Versorgungsspannung des Elektromotors 18 bestimmt.

Die elektronische Steuereinheit 17 arbeitet wie aus Fig. 4 ersichtlich folgendermaßen:
Zu Beginn ist die Motorspannung Uₘₒₜ niedrig, d. h. die Pumpe 7 arbeitet im stand by-Betrieb. Das vom Stromsensor 15 über die elektronische Steuereinheit 17 zum Schalttransistor 16 geleitete Signal I wird mit einem eingestellten Einschaltgrenzwert le verglichen und bei einer Überschreitung des Grenzwertes le die volle Motorspannung Uₘₒₜ auf den Motor 13. bzw. die Pumpe 7 geschaltet. Diese Motorspannung Uₘₒₜ bleibt solange bestehen, bis von dem Stromsensor 15 ein Signal l zur elektronischen Steuereinheit 17 geleitet wird, das kleiner ist als ein Ausschaltgrenzwert la. Bei Unterschreitung dieses Ausschaltgrenzwertes la wird die Motorspannung Uₘₒₜ wieder zurückgeschaltet, so daß die Pumpe 7 im stand by-Betrieb arbeitet. Um den Lenkkomfort durch einen schnellen Wechsel zwischen Einschalten und Ausschalten der vollen Motorspannung Uₘₒₜ zu vermeiden, ist eine Mindestzeit tₘᵢₙ vorgesehen. Erst nach Überschreiten dieser Mindestzeit tₘᵢₙ wird die Motorspannung Uₘₒₜ wieder zurückgeschaltet.

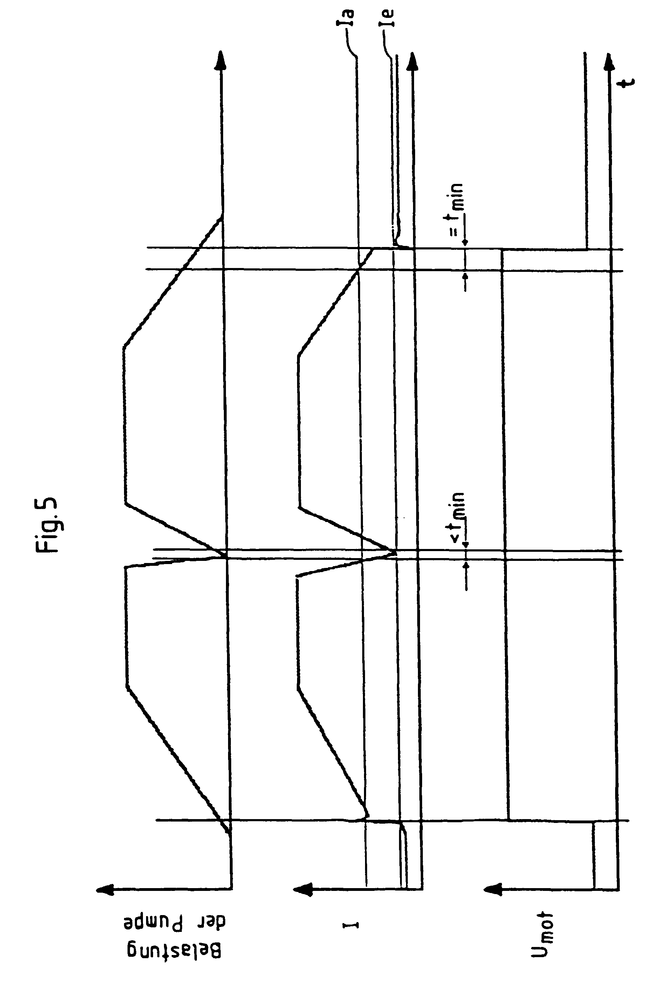

Die Abhängigkeit der Motorspannung Uₘₒₜ vom Strom l durch den Schalttransistor 16 sowie die Belastung der Pumpe 7 sind in Fig. 5 dargestellt. Diesen Diagrammen ist zu entnehmen, daß die volle Motorspannung Uₘₒₜ bereitgestellt wird, sobald das Stromsignal den Einschaltgrenzwert le überschreitet. Die Zurückschaltung der Motorspannung Uₘₒₜ in den stand by-Betrieb erfolgt, wenn das Stromsignal l für eine Mindestzeit tₘᵢₙ die Ausschaltgrenze la unterschreitet.

Mit einer solchermaßen ausgestalteten Servolenkvorrichtung wird einerseits gewährleistet, daß auch bei abgeschaltetem Antriebsmotor des Fahrzeuges die Servounterstützung der Lenkung gewährleistet ist, da die Pumpe 7 zur Versorgung des Servoventils 6 bzw. des Hydraulikzylinders 1 mit Hydraulikflüssigkeit vom Elektromotor 13 angetrieben wird, der seine Versorgungsspannung von der Batterie 14 erhält. Andererseits ermöglicht die Verwendung des Stromsensors 15 und des Näherungssensors 18 zusammen mit der elektronischen Steuereinheit 17 und dem Schalttransistor 16 eine bedarfsabhängige Leistungsaufnahme der Pumpe 7, wodurch eine erhöhte Lebensdauer der Komponenten, eine geringere Geräuschentwicklung und letztendlich ein verringerte Energieverbrauch bewirkt werden. Besonders vorteilhaft ist, daß diese, aus dem Stromsensor 15, dem Drucksensor und der elektronischen Steuereinheit 17 sowie dem Schalttransistor 16 bestehende Elektronik 21 nachträglich in bestehende Servolenkvorrichtungen eingebaut werden kann.

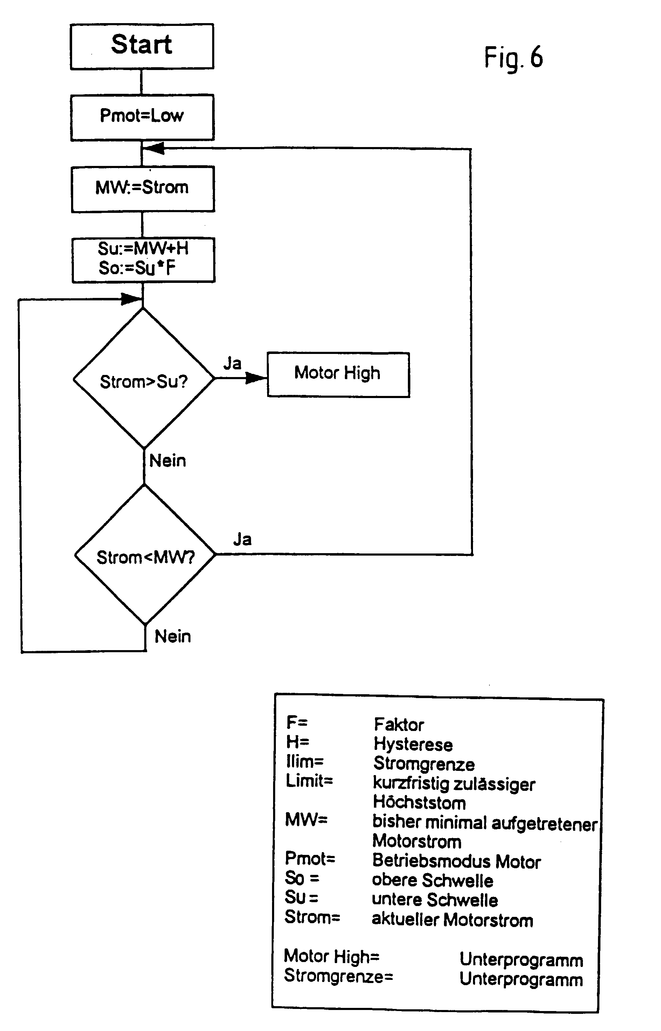

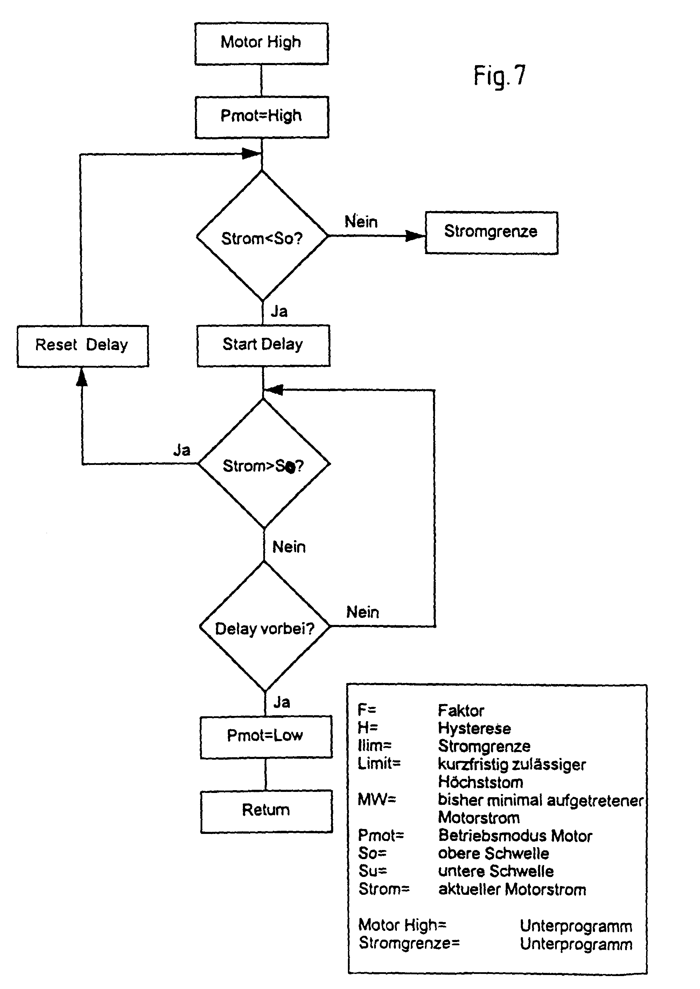

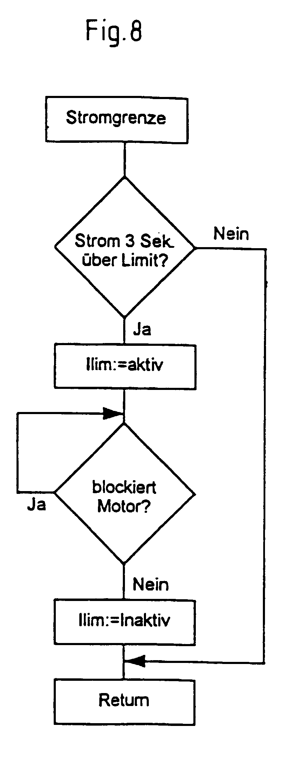

Die in den Figuren 6, 7 und 8 dargestellten Flußdiagramme zeigen ein Ausführungsbeispiel für eine Verfahrenssteuerung. Die Fig. 6 zeigt das Basisprogramm, während die Figuren 7 und 8 die Fließdiagramme für Unterprogramme zeigen. Ausgehend vom Startpunkt gemäß Fig. 6 wird der Motor zunächst in einen Betriebszustand mit geringer Leistungsaufnahme geschaltet. Es wird dann der minimale Stromwert MW mittels Sensoren erfaßt und zur Berechnung einer unteren und einer oberen Schwelle Su, So verwendet. Es wird dann abgeprüft, ob der aktuelle Motorstrom die untere Schwelle überschreitet. Solange dies nicht der Fall ist, wird geprüft, ob der Motorstrom den bisher festgestellten minimalen Motorstrom MW unterschreitet. Ist dies der Fall, kehrt die Steuerung zu dem Punkt zurück, in welchem MW festgestellt wird. Ist dies nicht der Fall, kehrt die Routine zu dem Punkt zurück, an welchem überprüft wird, ob der aktuelle Motorstrom die untere Schwelle Su überschreitet. Diese beiden beschriebenen Routinen werden solange weitergeführt, bis festgestellt wird, daß der aktuelle Motorstrom die untere Grenze Su überschreitet. In diesem Falle wird die in der Figur 7 gezeigte sogenannte "Motorhigh"-Routine aktiviert. Hier wird zunächst in einem ersten Schritt der Betriebsmodus des Motors hochgesetzt. Dann wird überprüft, ob der Strom unterhalb der oberen Schwelle So liegt. Es wird zunächst ein Zeitintervall gestartet. Es wird dann geprüft, ob der Strom die obere Grenze So wieder überschritten hat (es wird wieder gelenkt). Wenn dieses der Fall ist, wird das Zeitintervall wieder zurückgesetzt und die Prüfung wird wiederholt. Sollte der Strom nun wieder unter der oberen Grenze liegen, wird das Zeitintervall neu gestartet und die Prüfung erfolgt, ob der Strom die obere Grenze So wieder überschreitet. Ist dieses nicht der Fall, wird geprüft, ob das Zeitintervall beendet ist, "Delay vorbei"?. Solange dieses nicht der Fall ist, wird die Prüfung wiederholt. Steigt innerhalb dieses Zeitintervalls der Strom wieder über die obere Grenze wird das Zeitintervall wieder zurückgesetzt und der obere Betriebszustand bleibt aufrecht erhalten. Wird jedoch die Zeitintervallprüfung beendet, wird der untere Betriebsmodus eingestellt und die Routine kehrt zurück in die Hauptroutine.

Während der in der Figur 7 gezeigten Routine wird, solange der aktuelle Motorstrom oberhalb der unteren Grenze Su liegt, regelmäßig überprüft, ob er noch unterhalb der oberen Grenze So liegt. Zu dem Zeitpunkt, zu dem der aktuelle Motorstrom diese obere Grenze überschreitet, wird die Routine "Stromgrenze aktiviert, welche in Figur 8 gezeigt ist.

In der in Figur 8 gezeigten Routine wird zunächst ermittelt, ob die obere Grenze So für drei Sekunden überschritten ist. Ist dies nicht der Fall, das heißt, kehrt der aktuelle Motorstrom innerhalb der drei Sekunden unter diese Grenze zurück, so kehrt die Routine in die "Motorhigh"-Routine gemäß Figur 7 zurück. Verbleibt der aktuelle Motorstrom jedoch drei Sekunden oberhalb der oberen Schwelle So, so wird eine Stromgrenze aktiviert, welche den Motor nur noch mit einem verringertem Strom versorgt. Über eine Sensorauswertung, beispielsweise die Auswertung eines Hallsensors, wird ermittelt, ob die Welle des Elektromotors sich dreht oder ob der Motor blockiert. Solange er dies tut verbleibt der Motor in seinem Zustand und die Stromgrenze bleibt aktiv. Dreht sich jedoch die Welle des Elektromotors, so bedeutet dies, daß sich die Betriebsbedingungen geändert haben, so daß der Druck abgefallen ist. Die Stromgrenze wird wieder zurückgenommen und die Routine kehrt in die "Motorhigh"-Routine zurück.

### Bezugszeichenliste:

- 1: Hydraulikzylinder
- 2: Kolbenstange
- 3: Spurstange
- 4: Kammer
- 5: Kammer
- 6: Servoventil
- 7: Pumpe
- 8: Leitung
- 9: Leitung
- 10: Reservoir
- 11: Kolben
- 12: Überdruckventil
- 13: Elektromotor
- 14: Batterie
- 15: Stromsensor
- 16: Schalttransistor
- 17: Steuereinheit
- 18: Näherungssensor
- 19: Lenkgetriebe
- 20: Lenkgetriebe
- 21: Elektronik
- Uₘₒₜ: = Motorspannung
- I: = Strom
- le: = Einschaltgrenzwert
- la: = Ausschaltgrenzwert
- tₘᵢₙ: = Mindestzeit

## Patentansprüche

1. Servolenkvorrichtung mit einem Servoventil (6) mit offener Mitte zur Versorgung eines Stellgliedes (1, 11) mit Hydraulikdruck und mit einer mittels eines Elektromotors (13) antreibbaren Pumpe (7) zur Versorgung des Servoventils (6) mit Hydraulikflüssigkeit, wobei die Leistungsaufnahme des Elektromotors (13) über eine Elektronik (21) infolge des Vergleiches von mittels Sensoren (15) überwachten Betriebsparametern (I) mit Sollwerten (So, Su, Ia, Ie) steuerbar ist, wobei die Sensoren (15) mit einer wenigstens einen Mikroprozessor aufweisenden Steuereinheit (17) verbunden sind, welche die Sollwerte in Abhängigkeit von überwachten Betriebsparametern (I) festlegt, wobei die Elektronik (21) einen Stromsensor (15) umfaßt, der die Stromaufnahme des Elektromotors (13) als ein Maß für die Leistungsanforderung der Pumpe (7) erfaßt,
**dadurch gekennzeichnet,** daß die Steuereinheit (17) über den Stromsensor (15) zur Festlegung eines Sollwertes (So, Su, Ia, Ie) zum Schalten zwischen Leistungsaufnahmebereichen des Elektromotors (13) ein Stromaufnahmeminimum (MW) ermittelt.

2. Servolenkvorrichtung nach Anspruch 1, dadurch gekennzeichnet, daß die Elektronik (21) einen Drucksensor umfaßt, der Druckänderungen am Servoventil (6) erfaßt.

3. Servolenkvorrichtung nach einem der vorhergehenden Ansprüche, dadurch gekennzeichnet, daß die Elektronik (21) einen Näherungssensor (18) umfaßt, der die Stellung eines Bauteils im Lenkgetriebe (19) abtastet.

4. Servolenkvorrichtung nach mindestens einem der Ansprüche 1 bis 3, dadurch gekennzeichnet, daß der Elektromotor (13) in Neutralstellung des Hydraulikzylinders (1) bzw. des Servoventils (6) mit einer Mindestspannung versorgt im stand by-Betrieb läuft.

5. Servolenkvorrichtung nach mindestens einem der Ansprüche 1 bis 4, dadurch gekennzeichnet, daß die Steuereinheit (17) das Signal des Sensors (15, 18) auswertet und daraus die Leistungsaufnahme des Elektromotors (13) bestimmt.

6. Servolenkvorrichtung nach einem der Ansprüche 1 bis 5, dadurch gekennzeichnet, daß die Steuereinheit eine Strombegrenzung für den Elektromotor (13) aktiviert, wenn für eine vorgegebene Zeit ein ausgewählter Betriebsparameter einen vorgegebenen Grenzwert überschreitet.

7. Servolenkvorrichtung nach einem der Ansprüche 1 bis 6, dadurch gekennzeichnet, daß die Elektronik einen Hallsensor aufweist.

8. Servolenkvorrichtung nach einem der Ansprüche 1 bis 7, dadurch gekennzeichnet, daß die Steuereinheit wenigstens zwei Betriebsparameter im Rahmen einer Plausibilitätsüberwachung überprüft.

9. Servolenkvorrichtung nach einem der Ansprüche 1 bis 8, dadurch gekennzeichnet, daß die Steuereinheit Speicher für Ablaufroutinen, Wertetabellen und Zwischenwerte aufweist.

10. Verfahren zur Steuerung des elektrischen Pumpenantriebsmotors einer Servolenkvorrichtung gemäß wenigstens einem der Ansprüche 1 bis 9, dadurch gekennzeichnet, daß Sollwerte für den Vergleich mit überwachten Betriebsparametern ihrerseits in Abhängigkeit von wenigstens einem überwachten Betriebsparameter ermittelt werden, wobei als Betriebsparameter die Stromaufnahme des Elektromotors überwacht wird, und wobei in regelmäßigen Zeitabständen die minimale Stromaufnahme ermittelt und dieser Wert als Basis zur Berechnung eines Umschaltwertes zwischen Leistungsaufnahmebereichen des Elektromotors verwendet wird.

11. Verfahren nach Anspruch 10, dadurch gekennzeichnet, daß als Betriebsparameter der Hydraulikdruck überwacht wird.

12. Verfahren nach einem der Ansprüche 10 bis 11, dadurch gekennzeichnet, daß als Betriebsparameter die Umdrehung der ElektromotorWelle überwacht wird.

13. Verfahren nach einem der Ansprüche 10 bis 12, dadurch gekennzeichnet, daß die Stromzufuhr zum Elektromotor begrenzt wird, wenn wenigstens ein ausgewählter Betriebsparameter für eine vorgegebene Zeitspanne einen festgelegten oberen Sollwert überschreitet.

14. Verfahren nach Anspruch 13, dadurch gekennzeichnet, daß die Begrenzung der Stromzufuhr so gewählt ist, daß der Elektromotor unterhalb einer Drehzahlgrenze verweilt.

15. Verfahren nach einem der Ansprüche 10 bis 14, dadurch gekennzeichnet, daß die Sollwertberechnung zeitgetaktet erfolgt.

16. Verfahren nach einem der Ansprüche 10 bis 15, dadurch gekennzeichnet, daß in funktionaler Beziehung zueinanderstehende, überwachte Betriebsparameter auf Plausibilität überprüft werden.

17. Verfahren nach Anspruch 16, dadurch gekennzeichnet, daß die Plausibilitätsprüfung anhand von gespeicherten Wertetabellen erfolgt.

## Claims

1. Power-assisted steering device with a servo valve (6) having an open centre for supplying an actuator (1, 11) with hydraulic pressure and with a pump (7) which can be driven by means of an electric motor (13) for supplying the servo valve (6) with hydraulic fluid, wherein the power consumption of the electric motor (13) can be controlled via an electronic system (21) owing to the comparison of operating parameters (I) monitored by sensors (15) with set values (So, Su, Ia, Ie), the sensors (15) being connected to a control unit (17) having at least one microprocessor, which control unit determines the set values as a function of monitoring operating parameters (I), the electronic system (21) comprising a current sensor (15) which detects the power consumption of the electric motor (13) as a gauge of the power requirement of the pump (7), **characterised in that** the control unit (17) determines a power consumption minimum (Mw) via the current sensor (15) to establish a set value (So, Su, Ia, Ie) for switching between power consumption ranges of the electric motor (13).

2. Power-assisted steering device according to claim 1, characterised in that the electronic system (21) comprises a pressure sensor which detects pressure changes at the servo valve (6).

3. Power-assisted steering device according to one of the preceding claims, characterised in that the electronics system (21) comprises a proximity sensor which scans the position of a component in the steering mechanism (19).

4. Power-assisted steering device according to at least one of claims 1 to 3, characterised in that the electric motor (13) supplied with minimum voltage runs on standby in the neutral position of the hydraulic cylinder (1) or of the servo valve (6).

5. Power-assisted steering device according to at least one of claims 1 to 4, characterised in that the control unit (17) evaluates the signal of the sensor (15, 18) and defines the power consumption of the electric motor (13) from it.

6. Power-assisted steering device according to one of claims 1 to 5, characterised in that the control unit activates a current limiter for the electric motor (13) when a selected operating parameter exceeds a predetermined limit value for a predetermined time.

7. Power-assisted steering device according to one of claims 1 to 6, characterised in that the electronic system has a Hall sensor.

8. Power-assisted steering device according to one of claims 1 to 7, characterised in that the control unit checks at least two operating parameters in the context of a plausibility check.

9. Power-assisted steering device according to one of claims 1 to 8, characterised in that the control unit has memories for executive routines, truth tables and intermediate values.

10. Method of controlling the electric pump driving motor of a power-assisted steering device according to at least one of claims 1 to 9, characterised in that set values are determined for comparison with monitored operating parameters in turn as a function of at least one monitored operating parameter, wherein the power consumption of the electric motor is monitored as operating parameter and wherein the minimum power consumption is determined at regular time intervals and this value is used as a basis for calculating a changeover value between power consumption ranges of the electric motor.

11. Method according to claim 10, characterised in that the hydraulic pressure is monitored as operating parameter.

12. Method according to one of claims 10 to 11, characterised in that the rotation of the electric motor shaft is monitored as operating parameter.

13. Method according to one of claims 10 to 12, characterised in that the power supply to the electric motor is limited when at least one selected operating parameter exceeds a fixed upper set value for a predetermined period of time.

14. Method according to claim 13, characterised in that the limitation of the current supply is selected such that the electric motor dwells below a speed limit.

15. Method according to one of claims 10 to 14, characterised in that set value calculation is timed.

16. Method according to one of claims 10 to 15, characterised in that functionally related monitored operating parameters are checked for plausibility.

17. Method according to claim 16, characterised in that the plausibility check is carried out with reference to stored truth tables.

## Revendications

1. Dispositif de servodirection comprenant une servovalve (6) à centre ouvert pour alimenter un élément de positionnement (1, 11) en pression hydraulique et comprenant une pompe (7) entraînée par un moteur électrique (13) pour alimenter la servovalve (6) en liquide hydraulique, la puissance absorbée du moteur électrique (13) étant modulée par une unité électronique (21) après comparaison entre des paramètres de fonctionnement (I) surveillés par des capteurs (15) et des valeurs de consigne (So, Su, Ia, Ie), les capteurs (15) étant connectés à une unité de commande (17) qui comporte au moins un microprocesseur et qui définit les valeurs de consigne en fonction des paramètres de fonctionnement (I) surveillés et l'unité électronique (21) comprenant un capteur de courant (15) qui détecte la consommation de courant du moteur électrique (13) en tant que mesure des besoins en puissance de la pompe (7),
caractérisé en ce que l'unité de commande (17) détermine un minimum de consommation de courant (MW) par l'intermédiaire du capteur de courant (15) afin de définir une valeur de consigne (So, Su, Ia, Ie) pour commuter entre les plages de puissance absorbée du moteur électrique (13).

2. Dispositif de servodirection selon la revendication 1, caractérisé en ce que l'unité électronique (21) comprend un capteur de pression qui enregistre les variations de pression au niveau de la servovalve (6).

3. Dispositif de servodirection selon l'une des revendications précédentes, caractérisé en ce que l'unité électronique (21) comporte un capteur de proximité (18) qui détecte la position d'un organe du mécanisme de direction (19).

4. Dispositif de servodirection selon au moins l'une des revendications 1 à 3, caractérisé en ce que, lorsque le vérin hydraulique (1) ou la servovalve (6) se trouve en position neutre, le moteur électrique (13) alimenté par une tension minimale tourne en régime d'attente.

5. Dispositif de servodirection selon au moins l'une des revendications 1 à 4, caractérisé en ce que l'unité de commande (17) analyse le signal du capteur (15, 18) et, sur cette base, détermine la puissance absorbée- du moteur électrique (13).

6. Dispositif de servodirection selon l'une des revendications 1 à 5, caractérisé en ce que l'unité de commande actionne un moyen de limitation de courant pour le moteur électrique (13) si un paramètre de fonctionnement sélectionné excède une valeur limite prédéfinie pendant une durée prédéfinie.

7. Dispositif de servodirection selon l'une des revendications 1 à 6, caractérisé en ce que l'unité électronique comporte un capteur de Hall.

8. Dispositif de servodirection selon l'une des revendications 1 à 7, caractérisé en ce que l'unité de commande contrôle au moins deux paramètres de fonctionnement dans le cadre d'un contrôle de plausibilité.

9. Dispositif de servodirection selon l'une des revendications 1 à 8, caractérisé en ce que l'unité de commande comporte des mémoires pour des routines d'exécution, des tableaux de valeurs- et des valeurs intermédiaires.

10. Procédé de commande du moteur électrique d'entraînement de pompe d'un dispositif de servodirection selon au moins l'une des revendications 1 à 9, caractérisé en ce que les valeurs de consigne auxquelles sont comparés des paramètres de fonctionnement surveillés sont, pour leur part, déterminées en fonction d'au moins un paramètre de fonctionnement surveillé, le paramètre de fonctionnement surveillé étant la consommation de courant du moteur électrique et la consommation de courant minimale étant enregistrée à intervalles réguliers et cette valeur servant de base pour calculer une valeur de commutation entre les plages de puissance absorbée du moteur électrique.

11. Procédé selon la revendication 10, caractérisé en ce que le paramètre de fonctionnement surveillé est la pression hydraulique.

12. Procédé selon l'une des revendications 10 à 11, caractérisé en ce que le paramètre de fonctionnement surveillé est la rotation de l'arbre du moteur électrique.

13. Procédé selon l'une des revendications 10 à 12, caractérisé en ce que l'alimentation en courant du moteur électrique est limitée si au moins un paramètre de fonctionnement sélectionné excède une valeur de consigne supérieure définie pendant un laps de temps prédéfini.

14. Procédé selon la revendication 13, caractérisé en ce que la limitation de l'alimentation en courant est choisie pour que le moteur électrique demeure au-dessous d'une limite de régime.

15. Procédé selon l'une des revendications 10 à 14, caractérisé en ce que le calcul des valeurs de consigne s'effectue de manière cadencée.

16. Procédé selon l'une des revendications 10 à 15, caractérisé en ce que des paramètres de fonctionnement surveillés possédant entre eux un rapport fonctionnel font l'objet d'un contrôle de plausibilité.

17. Procédé selon la revendication 16, caractérisé en ce que le contrôle de plausibilité s'effectue à l'aide de tableaux de valeurs mémorisés.
